(19) Europäisches Patentamt / European Patent Office / Office européen des brevets

(11) **EP 4 783 487 A1**

(12) **EUROPEAN PATENT APPLICATION**

(43) Date of publication:
**29.07.2026 Bulletin 2026/31**

(21) Application number: **26153614.8**

(22) Date of filing: **22.01.2026**

(51) International Patent Classification (IPC):
**H04B 10/118** (2013.01)

(52) Cooperative Patent Classification (CPC):
**H04B 10/118**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **27.01.2025 US 202563749899 P**

(71) Applicant: **MacDonald, Dettwiler and Associates Corporation**
**Ste-Anne-de-Bellevue, QC H9X 3R2 (CA)**

(72) Inventors:
• **ST-PIERRE, Sylvain**
  **Sainte-Anne-de-Bellevue, H9X 3R2 (CA)**
• **AHMED, Khaled Yehia Salem Morsy**
  **Sainte-Anne-de-Bellevue, H9X 3R2 (CA)**

(74) Representative: **Worsley, Theo Morgan**
**Withers & Rogers LLP**
**2 London Bridge**
**London SE1 9RA (GB)**

(54) **IMPINGEMENT DETECTION AND POINTING CORRECTION FOR OPTICAL INTER-SATELLITE LINKS**

(57) A system and method for impingement detection and pointing correction ("IPDC") in an optical intersatellite link ("OISL") is provided. The system includes an optical terminal, an IPDC system, and a steering module. The optical terminal receives a laser signal from a second satellite via the OISL and outputs signal measurement parameters based on the laser signal. The IPDC system determines a plurality of angle corrections using (i) a mapping of a predetermined impinged pointing angle of the optical terminal and a corresponding angle correction; or (ii) a machine learning model configured to receive the signal measurement parameters as input and output the angle correction. The IPDC system determines a pointing correction based on the signal measurement parameters and the angle correction. The steering module steers the optical terminal based on the pointing correction.

100

FIG. 1

**Description**

**Technical Field**

The following relates generally to optical intersatellite links, and more particularly to systems and methods for improving the connection of optical inter-satellite links.

**Introduction**

Optical Inter-Satellite Links (OISLs) between satellites are more prevalent today due to the increased number of satellites in Low Earth Orbit (LEO), benefits of interconnecting satellites directly (i.e. without having to relay information via earth stations) and advantages in data transmission rates compared to inter-satellite Radio frequency (RF) links. OISLs establish links between satellites using a pointing, acquisition, and tracking process based on Pointing, Acquisition, and Tracking (PAT) techniques.

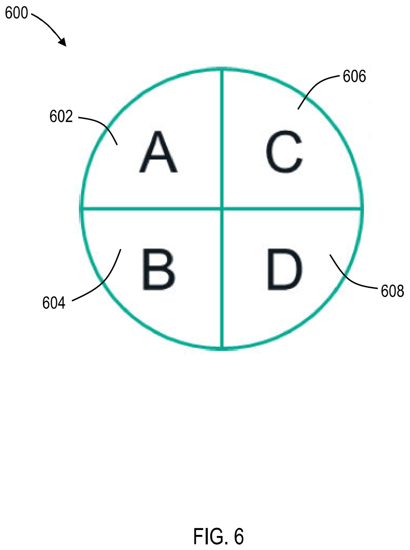

In some existing systems, PAT techniques use an Acquisition and Tracking Sensor (ATS). The ATS is normally a quadrant photodiode detector ("quadcell"). Figure 6 illustrates an example quadrant photodetector 600 with cells 602, 604, 606, 608). The ATS is divided into 4 identical cells (each cell is referred to as A, B, C, and D respectively) evenly arranged in a rectangular pattern around a center of the ATS. Each of the cells obtains power measurements from the laser beam used for an OISL.

During the pointing, acquisition, and tracking process, power measurements from each cell (A, B, C, D) are collected and compared using a controller. The controller computes feedback Azimuth and Elevation coefficients to determine from which direction the laser beam is coming and how to optimally steer the telescope towards the transmitting satellite. The feedback coefficients are:

$$\text{Equation (1).} \quad \text{The Azimuth (horizontal) Coefficients:} \frac{(A+B)-(C+D)}{A+B+C+D}$$

$$\text{Equation (2).} \quad \text{The Elevation (vertical) Coefficients:} \frac{(A+C)-(B+D)}{A+B+C+D}$$

Due to the extremely narrow beam size and fast relative satellite displacement velocities (5-8 km/sec), PAT techniques need to accurately and rapidly compile the Azimuth and Elevation coefficients to adequately determine pointing corrections that are required to create and/or maintain the link. Amongst others, pointing errors can occur due to link budget fluctuations, satellite attitude errors, thermal elastic distortion, ephemeris inaccuracies, and deformation of the laser beam caused by obstructions (e.g., mild and severe) to the laser beam. Obstructions to the laser beam can occur due to the presence of impingements in the Field of View (FOV) of the two interconnecting optical terminals such as an antenna mounted on a satellite. Obstructions to the laser beam are especially prevalent for OISLs operating at low elevation angles with respect to their reference interface plane.

Accordingly, there is a need for an improved system and method for impingement detection and pointing correction of OISLs that overcomes at least some of the disadvantages of existing systems and methods.

**Summary**

A system for use on a first satellite for impingement detection and pointing correction of an optical intersatellite link (OISL) is provided. The system includes: an optical terminal for receiving a laser signal from a second satellite via the OISL and outputting signal measurement parameters based on the laser signal; an Impingement Detection and Pointing Correction System (IDPC) configured to: determine a plurality of angle corrections using: a mapping of a predetermined impinged pointing angle of the optical terminal and a corresponding angle correction, the mapping stored as a data structure in a data storage device; or a machine learning model stored in the data storage device and configured to receive the signal measurement parameters as input and output the angle correction; and determine a pointing correction based on the signal measurement parameters and the angle correction; and a steering module configured to steer the optical terminal based on the pointing correction.

In an embodiment, the optical terminal receives the laser signal via a Laser Signal Capture apparatus equipped with an acquisition and tracking sensor (ATS).

In an embodiment, the ATS is a quadrant photodiode detector.

In an embodiment, the angle correction includes an angle correcting factor for each quadrant in the quadrant photodiode detector.

In an embodiment, the predetermined impinged pointing angle is defined by Azimuth and Elevation angles of an optical head of the optical terminal relative to a satellite body of the first satellite and the second satellite.

In an embodiment, the predetermined impinged pointing angle in the mapping includes an Azimuth angle and an Elevation angle.

In an embodiment, the pointing correction is added to Azimuth and Elevation signals to bias a controller of the optical terminal to an actual center of a non-deformed power capture pattern.

In an embodiment, the angle correction comprises angle correcting factors that are configured based on a range of angular Azimuth and Elevation angles where the impingement exists and a sensitivity of an area that is obstructed by the impingement.

In an embodiment, the angle correcting factors for each Azimuth and Elevation angle are estimated via simulation and tested for efficiency in a static mode or a learning mode.

In an embodiment, the predetermined impinged pointing angle is identified through a field of view (FOV) analysis performed during design of the first and the second satellite.

In an embodiment, the FOV analysis further includes identifying locations of any impinged pointing angles over a full Azimuth and Elevation range of the optical terminal, and the impinged pointing angles are stored in the mapping with corresponding angle corrections.

In an embodiment, the predetermined impinged pointing angle includes Azimuth and Elevation angles at which the impingement exists, a shape of the impingement, and an impact of the impingement.

In an embodiment, the pointing correction includes one or more commands to the optical terminal to change the Azimuth and Elevation angles of the optical terminal in a way that reduces a pointing error.

In an embodiment, the onboard processor receives a communication from a network operating center indicating that the second satellite is an insider satellite, and the onboard processor obtains the angle correction only upon identifying the second satellite as an insider satellite.

In an embodiment, the onboard processor uses configuration information from a previous connection between the first satellite and the second satellite indicating that the second satellite is an insider satellite stored in computer memory on the first satellite, and the onboard processor obtains the angle correction only upon identifying the second satellite as an insider satellite.

In an embodiment, the first satellite and the second satellite are part of a same satellite constellation.

In an embodiment, the machine learning model includes at least one of least mean squares, recursive least squares, Bayesian, maximum likelihood, correlation, and covariance matching.

In an embodiment, the machine learning model includes transfer learning.

In an embodiment, the machine learning model includes an anomaly detection model.

In an embodiment, the machine learning model includes a time-series model.

In an embodiment, the time-series model includes a long short-term memory model.

In an embodiment, the time-series model includes a recurrent neural network-based model.

A method of impingement detection and pointing correction of an optical intersatellite link (OISL) is also provided. The method includes: receiving, at an optical terminal of a first satellite, a laser signal from a second satellite via the OISL when the optical terminal is pointed at a pointing angle; obtaining, by a sensor of the optical terminal, signal measurement parameters based on the laser signal; obtaining, via an acquisition and tracking sensor (ATS), Azimuth and Elevation angles of the optical terminal of a second satellite and outputting the signal measurement parameters by the optical terminal; storing, in a data storage device on the first satellite, a mapping of the pointing angle to an angle correction, the pointing angle being a predetermined impinged pointing angle; obtaining, by an Impingement Detection and Pointing Correction (IDPC) System of the first satellite, the angle correction from the data storage device when the optical terminal is at the pointing angle using the mapping; determining, by the IDPC System, a pointing correction based on the signal measurement parameters and the angle correction; and steering the optical terminal based on the pointing correction.

A system for use on a first satellite is also provided. The system includes: an optical terminal for receiving a laser signal from a second satellite via an optical intersatellite link (OISL) and outputting signal measurement parameters based on the laser signal; a data storage device storing a mapping of a predetermined impinged pointing angle of the optical terminal to an angle correction; an Impingement Detection and Pointing Correction (IDPC) System configured to: obtain the angle correction from the data storage device when the optical terminal is at the predetermined impinged pointing angle using the mapping; and determine a pointing correction based on the signal measurement parameters and the angle correction; and a steering module configured to steer the optical terminal based on the pointing correction.

A system for use on a first satellite for impingement detection and pointing correction of optical intersatellite links is also provided. The system includes: an optical terminal for receiving a laser signal from a second satellite via an optical intersatellite link (OISL) and outputting signal measurement parameters based on the laser signal; an Impingement Detection and Pointing Correction (IDPC) System configured to: obtain a plurality of angle corrections for correcting the signal measurement parameters, by: where the second satellite is an insider satellite, obtaining the angle correction from a mapping data structure that maps one or more predetermined impinged pointing angles of the optical terminal to a respective angle correction, the mapping data structure stored in a data storage device; where the second satellite is an outsider satellite, obtaining the angle correction from a machine learning model configured to receive the signal measurement parameters as input and output the angle correction; and determine a pointing correction based on the signal measurement parameters and the obtained angle correction; and a steering module configured to steer the optical terminal based on the pointing correction.

In an embodiment, the second satellite is identified as an insider satellite or an outsider satellite based on information provided to the first satellite from a network operating center.

In an embodiment, the second satellite is identified as an insider satellite or an outsider satellite based on information stored in computer memory onboard the first satellite from a previous connection between the first satellite and the second satellite.

A method for impingement detection and pointing correction of optical inter-satellite links (OISLs) performed on a first satellite is also provided. The method includes: storing, in a computer memory or data storage device onboard the first satellite, information indicating whether a second satellite is an insider satellite with a known OISL impingement or an outsider satellite with an unknown OISL impingement; where the signal indicates the second satellite is an insider satellite, obtaining by an Impingement Detection and Pointing Correction (IDPC) System an angle correction from a mapping stored as a data structure in a data storage device on the first satellite; where the signal indicates the second satellite is an outsider satellite, obtaining by the IDPC System the angle correction from a machine learning model executed by the onboard processor; and performing a pointing correction on an optical terminal of the first satellite used to transmit or receive over the OISL based on the angle correction.

In an embodiment, the information is obtained from a signal provided by a network operating center.

In an embodiment, the information is from a previous connection between the first satellite and the second satellite.

A method of impingement detection and pointing correction of an optical inter-satellite link (OISL) is also provided. The method includes: receiving, at an optical terminal of a first satellite, a laser signal from a second satellite via the optical intersatellite link (OISL); outputting signal measurement parameters from the optical terminal based on the laser signal; providing the signal measurement parameters as input to a machine learning model executed by an Impingement Detection and Pointing Correction (IDPC) System of the first satellite, the machine learning model configured to receive the signal measurement parameters as input and output a plurality of angle corrections; determining the angle correction with the machine learning model; determining, by the IDPC System, a pointing correction based on the signal measurement parameters and the angle correction; and steering the optical terminal based on the pointing correction.

A system for impingement detection and pointing correction of an optical intersatellite link (OISL) on a first satellite is also provided. The system includes: a data storage device storing: a mapping data structure that maps each of one or more predetermined impinged pointing angles of an optical terminal to a respective angle correction; and a machine learning model configured to receive signal measurement parameters recorded by the optical terminal as input and output a angle correction; one or more processors configured to: determine whether a second satellite communicating with the first satellite through the optical terminal is of a first class or a second class based on a signal received by the first satellite; determine the angle correction using the mapping data structure when the second satellite is determined to be of the first class; determine the angle correction using the machine learning model when the second satellite is determined to be of the second class; and determine a pointing correction based on the signal measurement parameters and the angle correction, the pointing correction for steering the optical terminal.

In an embodiment, the signal is provided by a network operating center.

In an embodiment, the signal is provided by the second satellite.

In an embodiment, the first class is a characterized satellite class, and the second class is an uncharacterized satellite class.

Other aspects and features will become apparent to those ordinarily skilled in the art, upon review of the following description of some exemplary embodiments.

**Brief Description of the Drawings**

The drawings included herewith are for illustrating various examples of articles, methods, and apparatuses of the present specification. In the drawings:

Figure 1 is a block diagram of a system for intersatellite communication using OISLs, according to an embodiment;

Figure 2 is a block diagram of the impingement detection and pointing correction system of Figure 1 in further detail, according to an embodiment;

Figure 3 is a flow diagram of a method of OISL impingement detection and pointing correction, according to an embodiment;

Figure 4 is a flow diagram of a method of OISL impingement detection and pointing correction for a known impingement, according to an embodiment;

Figure 5 is a flow diagram of a method of OISL impingement detection and pointing correction for an unknown impingement, according to an embodiment; and

Figure 6 is a schematic diagram of a quadrant photodetector, may be referred to as quadcell, or a sensor, according to an embodiment.

## Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit or any other suitable computing device.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to optical intersatellite links, and more particularly to systems and methods for impingement detection and pointing correction for OISLs. In some embodiments, the systems and methods of the present disclosure use a correction algorithm and/or a machine learning model to obtain an angle correction that is used to determine a pointing correction for an optical terminal of an OISL. In some embodiments, whether the correction algorithm or the machine algorithm is used depends on whether the satellite being communicated with is of a first class or category (correction algorithm is applied) or a second class or category (machine learning model is applied). Generally, the first and second classes may be distinguished based on any factor that warrants or might benefit from differential use of the correction algorithm or machine learning model. In a particular embodiment, the first class or category corresponds to a characterized satellite (with a known impingement) and the second class or category corresponds to an uncharacterized satellite (with an unknown impingement).

As used herein, the term "impingement" and variants thereof may be used interchangeably with the term "obstruction" and its variants.

As used herein, the term "obstruction" and variants thereof (e.g., 'obstructed') are intended to encompass both mild and severe obstructions (e.g., a first degree of obstruction and a second degree of obstruction). Whether an obstruction is considered or categorized as a mild or severe obstruction may be determined with reference to a threshold (e.g., degree of signal attenuation, percentage of obstruction). In some embodiments, mild and severe obstructions may be distinguished by a degree of signal attenuation, with mild obstruction corresponding to relatively low attenuation (e.g.,

less than about 2 dB) and severe obstruction corresponding to higher attenuation (e.g., greater than about 2 dB). The concepts and techniques described herein are applicable in scenarios involving either mild or severe obstruction. It should be noted that severe obstructions may exclude complete obstructions (i.e., complete blockage of the laser signal) at which the quadcell is in the dark with the four cells (e.g., A, B, C, D) ~0. In such cases, a correction (e.g., using a lookup table) may not help.

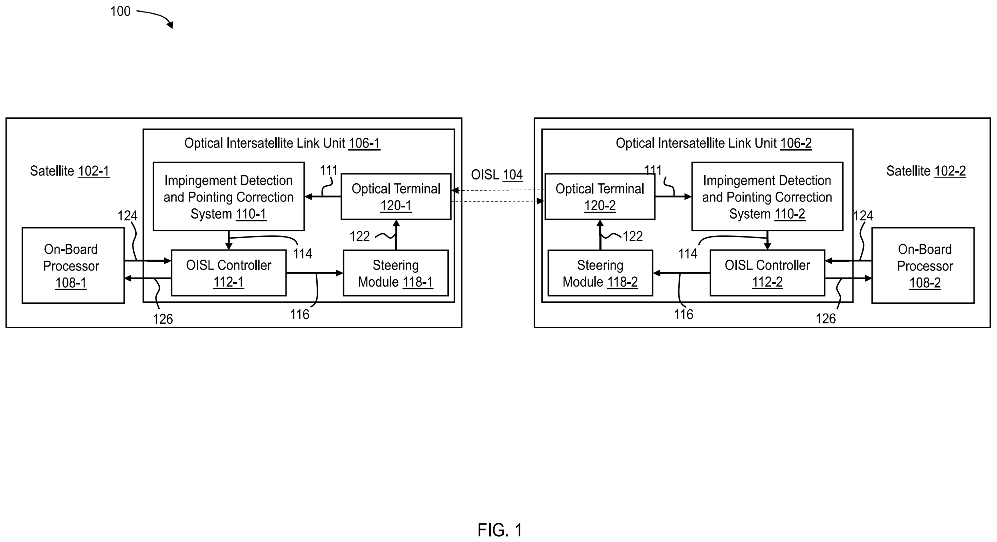

Referring now to Figure 1, shown therein is a system 100 for intersatellite communication via an OISL, according to an embodiment.

The system 100 includes satellites 102-1 and 102-2. The satellites 102-1, 102-2 communicate with one another via an OISL 104. Communication via the OISL 104 is bidirectional between the satellites 102-1, 102-2.

The satellites 102-1, 102-2 may be of the same satellite constellation or may be from different constellations. The satellites 102-1, 102-2 being of the same constellation are insider satellites to each other. The satellites 102-1, 102-2 being of different constellations are outsider satellites to each other. In some cases in the present disclosure, insider satellites and outsider satellites may be referred to as characterized and uncharacterized satellites, respectively. Characterized satellites include a known impingement scenario where details of the impingements on the respective satellites are known to each other, and uncharacterized satellites include an unknown impingement scenario where details of the impingements on the respective satellites are not known to each other.

The satellites 102-1, 102-2 include OISL units 106-1, 106-2, respectively. The OISL units 106-1 and 106-2 communicate via two (2) laser beams. A laser beam is transmitted in one direction from one OISL unit and received by the other OISL unit at a given laser wavelength. Another laser beam is transmitted in the other direction at another laser wavelength. The laser beams transport information between one satellite to the other satellite. The laser beam transports the information as modulated optical signals that carry the information.

The OISL units 106-1 and 106-2 are further configured to detect potential laser beams transmitted within the Field of View (FOV) range of the OISL units.

The OISL units 106-1, 106-2 comprise optical terminals 120-1, 120-2, respectively, configured to bidirectionally transmit and receive laser beams.

When receiving laser beam signals, optical terminals 120-1, 120-2 use a laser signal capture apparatus including an acquisition and tracking sensor (ATS) to point the optical terminal to establish and maintain the OISL 104.

The ATS comprises four individual cells ("quadcell") arranged around a center of the ATS. The cells of the ATS are each configured to obtain a power measurement of the laser beam. The power measurements individually implement a power capture pattern.

The power measurements are individually output by optical terminal 120-1, 120-2 as part of Received Signals measurements (RSMs) 111 (also referred to as signal measurement parameters). When acquisition is achieved (i.e., in tracking mode), additional signal information is included in the RSMs 111.

The ATS detects the direction from which the laser beam is coming and calculates the pointing error. In some cases, the incoming laser beam is split, with one part going to the ATS and the other part going to a receiver for detection and extraction of the information. Alignment of the laser beam with the center of the ATS is achieved via computations performed by a controller resulting in optimal detection, acquisition, and tracking of the laser beam.

Alignment of OISL units 106-1, 106-2 is achieved by a pointing and acquisition process. Alignment of the OISL units 106-1, 106-2 occurs where the orientation of the optical terminals 120-1, 120-2 of OISL units 106-1, 106-2, respectively, are such that the two optical terminals are aligned on the same optical axis and the bidirectional transmitted laser beam is at the center of the ATS of the optical terminal.

The laser beam may be obstructed by an impingement in space at a point along the path of the pointing direction of the laser beam. As an example, an impingement may be an object attached to satellites 102-1, 102-2 (e.g., an antenna). A laser beam obstructed by an impingement experiences reduction of the received power and deformation. The reduction of the received power and deformation of the laser beam at certain Azimuth and Elevation angles may introduce a power pattern de-pointing of the laser beam away from the center of the ATS that is suboptimal for detection, acquisition, and tracking of the laser beam. The obstruction may be a mild obstruction (which may also be referred to as a minor or first degree obstruction) or a severe obstruction (which may also be referred to as a major or second degree obstruction). Mild obstruction may correspond to a relatively small signal attenuation (e.g., (less than ~2 dB). Severe obstruction may correspond to a relatively large signal attenuation (e.g., greater than ~2 dB). A threshold value may be used to categorize or distinguish between mild and severe obstructions.

Impingements can be anticipated when the design details of the communicating satellites 102-1, 102-2 are known. For example, where satellite 102-1 has knowledge of the design of itself and of satellite 102-2 (e.g., shapes, distances, Azimuth and Elevation angles), details of the impingements on satellites 102-1 and 102-2 can be stored on satellite 102-1 and may thus be considered known (a "known impingement" scenario). Such details may include, for example, information of Azimuth and Elevation angles of the optical terminal at which an obstruction will occur. In contrast, where satellite 102-1 does not have knowledge of the design of itself and of satellite 102-2, impingements on satellites 102-1 and 102-2 are not known to satellite 102-1 (an "unknown impingement" scenario). Known impingement scenarios may arise when satellites 102-1 and 102-2 are of the same satellite constellation. Such satellites may be referred to as insider satellites (or characterized satellites, because of known impingement issues). Unknown impingement scenarios may arise when satellites 102-1 and 102-2 are not of the same constellation (and thus their designs are unknown to each other). Such satellites may be referred to as outsider satellites (or uncharacterized satellites) with respect to each other (as the satellite being communicated with is an outsider). The OISL unit 106-1 receives information of whether the OISL 104 is with an insider satellite or an outsider satellite from an on-board processor, such as on-board processor 108-1.

The satellites 102-1, 102-2 include on-board processors 108-1, 108-2, respectively. The on-board processor 108 controls the OISL 106 by sending commands 124 to and receiving telemetries 126 from an OISL controller 112 of the OISL unit 106. The on-board processor 108 may be implemented on one or more data processing devices. A connection between OISL unit 106-1 and OISL unit 106-2 may be established as per a connection plan. The on-board processor 108-1 receives both the host and remote satellite ephemerides over time and provides information of whether the satellite 102-2 is an insider satellite or an outsider satellite to the OISL unit 106-1 for pointing to the OISL unit 106-2. Once acquisition is reached, the OISL units 106-1, 106-2 track each other autonomously.

The OISL units 106-1, 106-2 include impingement detection and pointing correction (IDPC) systems 110-1, 110-2, respectively. The IDPC systems 110-1, 110-2, may also be implemented in the on-board processors 108-1, 108-2, respectively. The IDPC systems may be implemented on one or more data processing devices.

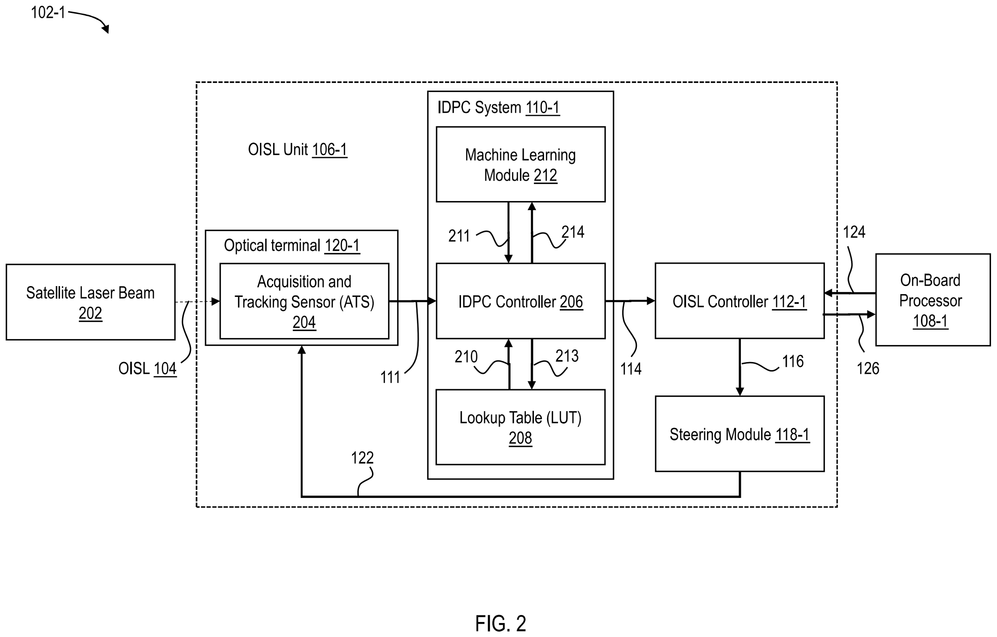

The IDPC systems 110-1, 110-2 are configured to compensate an impingement based on RSMs 111 from the OISL units 106-1, 106-2 and determine a correction of pointing based on the RSMs 111 and, if applicable, known impingement scenario(s). The IDPC systems 110 are further configured to generate Azimuth Coefficients and Elevation Coefficients based on the RSMs 111 and, if applicable, known impingement scenario(s). The IDPC systems 110 include a controller, such as the IDPC Controller 206 of Figure 2, configured to use the Azimuth Coefficients and Elevation Coefficients iteratively until converging to a small error at which the RSMs 111 are either as per data from a lookup table or a machine learning module, such as Lookup Table 208 and Machine Learning Module 212 shown in Figure 2. The controller may be, for example, a proportional-integral-derivative (PID) controller.

The IDPC systems 110-1, 110-2 are further configured to implement either IDPC processes for an insider satellite (known impingement processes) or processes for an outsider satellite (unknown impingement processes). An insider satellite may be referred to as a characterized satellite and an outside satellite referred to as an uncharacterized satellite (given the known and unknown impingement processes, respectively).

A known impingement scenario occurs when an impingement is identified for a given optical terminal within a combination of specific Azimuth and Elevation angles of Field of View (FOV) ranges for the OISL units 106.

An unknown impingement scenario occurs when connecting with an "outsider" optical terminal without the awareness that an impingement exists within the Azimuth/Elevation angles of the outsider optical terminal and without the knowledge of the shape, dimensions and effect of the impingement present along the OISL with the outsider optical terminal.

The OISL units 106-1, 106-2 include OISL controllers 112-1, 112-2, respectively. The OISL controllers 112-1, 112-2 generate control signals to steer OISL units 106-1, 106-2. The OISL controllers 112-1, 112-2 are configured to generate a pointing control signal 116 based on the pointing correction 114 output by IDPC systems 110-1, 110-2.

The OISL units 106-1, 106-2 include steering modules 118-1, 118-2, respectively. The steering modules 118-1, 118-2 generate motor control signals 122 according to pointing control signal 116. The steering modules 118-1, 118-2 are configured to move optical terminals 120-1, 120-2, respectively, according to motor control signals 122 to perform pointing correction of OISL units 106-1, 106-2 of satellites 102-1, 102-2 respectively.

Optical terminals 120-1, 120-2 may comprise, as an example, a telescope, a control module, and a set of optical sensors, mirrors, and lenses. The telescope is configured to be steered using motors at specific Azimuth and Elevation angles. The control module is configured to send signals to control the motors for steering the telescope in a specific direction. The optical sensors, mirrors, and lenses are configured to, as example, direct and amplify the received laser beam of OISL 104 inside the telescope towards a receiver module of the optical terminal 120-1, and are further configured to, as example, direct and amplify the transmitted laser beam of OISL 104 to the telescope of the optical terminal 120-1. The steering modules 118-1, 118-2 perform steering of the telescope by sending control signals 122 to the motors of optical terminal 120-1, 120-2.

In operation, satellite 102-2 may transmit a laser beam from OISL unit 106-2 to satellite 102-1. Satellite 102-1 receives the laser beam at the optical terminal 120-1 of OISL unit 106-1. The OISL unit 106-1 outputs RSMs 111 acquired at the optical terminal 120-1 to the IDPC System 110-1. The IDPC system 110-1 is configured to determine a pointing correction 114 based on RSMs 111 and, if applicable, known impingement scenario(s). The pointing correction 114 is output to the OISL controller 112-1. The OISL controller 112-1 generates a pointing control signal 116 based on the pointing correction 114. The pointing control signal 116 is sent to steering module 118-1. The steering module 118-1 adjusts the motors of the telescope of the optical terminal 120-1 using motor control signals 122 according to pointing control signal 116. The steering module 118-1 adjusts the motors of the telescope of the optical terminal 120-1 to steer the optical terminal 120-1 and perform pointing correction.

Referring now to Figure 2, shown therein is the satellite 102-1 of Figure 1 in further detail, according to an embodiment.

Satellite 102-1 receives satellite laser beam 202 at Acquisition and Tracking Sensor (ATS) 204 of OISL unit 106-1. The laser beam 202 was transmitted by OISL unit 106-2 of satellite 102-2 of Figure 1. The ATS 204 is a component of the optical terminal 120-1. The ATS 204 detects laser beam 202, processes laser beam 202 and generates RSMs 111. RSMs 111 include, amongst others, information of the direction of arrival of laser beam 202. The on-board processor 108-1 receives information indicating whether the laser beam 202 is from an insider satellite or an outsider satellite via telemetry from satellite 102-2. The on-board processor 108-1 provides the information to OISL unit 106-1. The information may be received prior to receiving the laser beam 202, for example, as part of a prior communication over OISL 104 between satellites 102-1, 102-2. The onboard processor stores, in memory, configuration information from the prior communication indicating that the satellite 102-2 is an insider or outsider satellite. The information of whether the laser beam 202 is from an insider or outsider satellite may also be received by the satellite from a network operating center. The onboard processor stores the information from the network operating center in memory. Accordingly, where a previous connection has not been established and the satellite 102-1 receives information of whether the laser beam is from an insider or outsider satellite, the onboard processor of the satellite may store the signal for future use in subsequent OISL connections with the same satellite.

First and second scenarios, where satellite 102-2 is either an insider (or characterized) satellite or an outsider (or uncharacterized) satellite, respectively, will now be described in further detail.

In the first scenario, OISL unit 106-1 is aware that satellite 102-2 is an insider satellite such that known impingement scenarios can be used.

Satellite 102-1 may have received this information from a network operating center, or may have stored this information in memory of the onboard processor 108-1 based on a prior communication over OISL 104 between satellites 102-1, 102-2. The information (satellite 102-2 is an insider satellite) is provided from onboard processor 108-1 to the OISL unit 106-1.

In this scenario, information related to impingement(s) in the respective FOV of satellites 102-1, 102-2 is stored on satellite 102-1, as will be further described below.

IDPC system 110-1 includes IDPC controller 206 and lookup table (LUT) 208. The LUT 208 may also be stored in a data storage device of the OBP 108-1. The IDPC controller 206 receives RSMs 111 from the ATS 204. The IDPC controller 206 is configured to provide input 213 to LUT 208. The input 213 includes RSMs 111 and respective Azimuth and Elevation angles of the optical terminals 120-1, 120-2 for obtaining a corresponding set of angle correcting factors 210 ($\delta_A$, $\delta_B$, $d_C$, $\delta_D$) from the LUT 208. The input 213 further includes an address of the LUT 208 at which the corresponding set of angle correcting factors 210 are stored.

The LUT 208 is configured to provide angle correcting factors 210 to the IDPC controller 206. The angle correcting factors 210 stored at an address in the LUT 208 correspond to the Azimuth and Elevation angle of the satellites 102-1, 102-2 where there is existence of an impingement. The angle correcting factors 210 depend on the nature of the impingement, including the range of angular Azimuth and Elevation where the impingement exists, and the sensitivity of the area that is obstructed by the impingement. The angle correcting factors 210 for each Azimuth and Elevation angle may be estimated via simulation and then tested for efficiency in either a static or a learning mode. As an example, the LUT 208 stores a mapping of the relationship between (a) Azimuth and Elevation angles of the optical terminal 120-1,120-2 (b) information of the existence of an impingement, and (c) a corresponding set of angle correcting factors. Information of the existence of an impingement is known by the satellite 102-1. During operation, the Azimuth and Elevation angles of the optical terminal 120-1, 120-2 relative to the body of satellite 102-1, 102-2 are further known. As an example, the information of the existence of the impingement may be stored as a set comprising Azimuth angle, Elevation angle, and angle correcting factors. The four angle correcting factors are added to the power measurements from the quadcell to compensate for the misleading measurements due to the impingement. When applying such a correction, the optical terminal 120-1 is steered into the optimized direction towards the counter optical terminal 120-2. Hence, the angle correcting factors of the IDPC 110-1 counteract the pointing error introduced by the impingement.

As an example, where the impingement is from an object on satellite 102-1 or 102-2, the range of Azimuth and Elevation angles at which the satellite laser beam 202 would be obstructed by an impingement of satellite 102-1, 102-2 is known from the design process of the satellite 102-1, 102-2. Specifically, FOV analysis may be performed during the design of satellite 102-1, 102-2 to determine the location of impingements over the full Azimuth and Elevation range for the optical terminal 120-1, 120-2. For every Azimuth and Elevation position of the optical terminal 120-1, 120-2, the angle correcting factors are obtained from the LUT 208 and applied to the optical terminal. The known prior information of the impingement includes the Azimuth and Elevation angles at which the impingement exists, the shape of the impingement, and the impact of the impingement.

The IDPC controller 206 is configured to determine, based on the RSMs 111 and angle correcting factors 210, where to point the laser beam of OISL Unit 106-1 so that the optical terminals 120-1, 120-2 of satellites 102-1, 102-2 are best oriented in the presence of the impingement.

The IDPC controller 206 is configured to produce commands to the optical terminal 120-1 to change its Azimuth and Elevation angles in a way that reduces the impact of the impingement. Thus, the IDPC controller 206 mitigates misleading power measurements occurring due to the presence of an impingement by applying angle correcting factors, that better represent the optimum direction of the laser beam towards the counterpart optical terminal 120-2.

The IDPC controller 206 generates pointing correction 114 based on RSMs 111 and angle correcting factors 210. Pointing correction 114 is provided to OISL controller 112-1 to generate pointing control signal 116.

Steering module 118-1 generates motor control signals 122 based on pointing correction 114. Motor control signals 122 comprise signals to move the motors of the telescope of the optical terminal 120-1 of OISL unit 106-1 to perform pointing correction of the OISL unit 106-1.

In the second scenario, OISL unit 106-1 receives information that satellite 102-2 is an outsider satellite (e.g., satellites 102-1, 102-2 are not within the same constellation and known impingement scenarios cannot be used).

Satellite 102-1 may receive this information from a network operating center, or may have stored this information in memory of the onboard processor 108-1 based on a prior communication over OISL 104 between satellites 102-1, 102-2. The satellite 102-1 provides the information (that satellite 102-2 is an outsider or uncharacterized satellite) from onboard processor 108-1 to the OISL unit 106-1.

In this scenario, the IDPC system 110-1 includes machine learning module 212 to enable IDPC controller 206 to process the RSMs 111 and generate pointing correction 114. The machine learning module 212 may provide a variety of machine learning (ML) data 211 to IDPC controller 206.

The IDPC controller 206 is configured to provide input 214 to the ML module 212. The input 214 includes the RSMs 111.

In an embodiment, the machine learning module 212 includes a machine learning model built or trained utilizing any suitable mathematical optimization technique. Examples include, without limitation, least mean squares, recursive least squares, Bayesian, maximum likelihood, correlation, and covariance matching.

In an embodiment, the machine learning module 212 may use transfer learning with a pre-trained model to determine the existence of an impingement in the path of laser beam 202 from satellite 102-2 given a set of RSMs 111. In such embodiment, ML data 211 comprises information of the existence of an impingement.

In another embodiment, the machine learning module 212 may use anomaly detection to determine the existence of an impingement in space given a set of RSMs 111. In such embodiment, ML data 211 comprises information of the existence of an impingement.

In another embodiment, the machine learning module 212 may use a time-series model to determine angle correcting factors based on the Azimuth and Elevation angles of the optical terminal 120-1 and a series of RSMs 111 stored over a certain period of time. In such embodiment, ML data 211 comprises information of angle correcting factors.

In another embodiment, reinforcement learning (RL) may be used to develop a specific impingement detection and pointing correction algorithm given a set of RSMs 111. In this embodiment, the machine learning model may be deployed to the IDPC controller 206. Since RL is a powerful artificial intelligence method, it can also perform the whole role of pointing optimization whether there is an impingement or not. For that scenario, RL can be trained using a set of Azimuth and Elevation ranges and the corresponding received power measurements over a period of time. These angle ranges can include both the clear FOV and the impingement scenario so that the algorithm optimizes the pointing of the optical terminal 120-1 for both cases. The RL may provide pointing correction 114 to OISL controller 112-1.

The OISL controller 112-1 receives the pointing correction 114 and generates pointing control signal 116. The steering module 118-1 performs pointing correction of the optical terminal 120-1 based on the pointing control signal 116. Steering module 118-1 may perform pointing correction by steering the telescope of the optical terminal 120-1 such that the laser beam 202 is pointed at the center of ATS 204. Steering module 118-1 steers the optical terminal 120-1 using motor control signals 122.

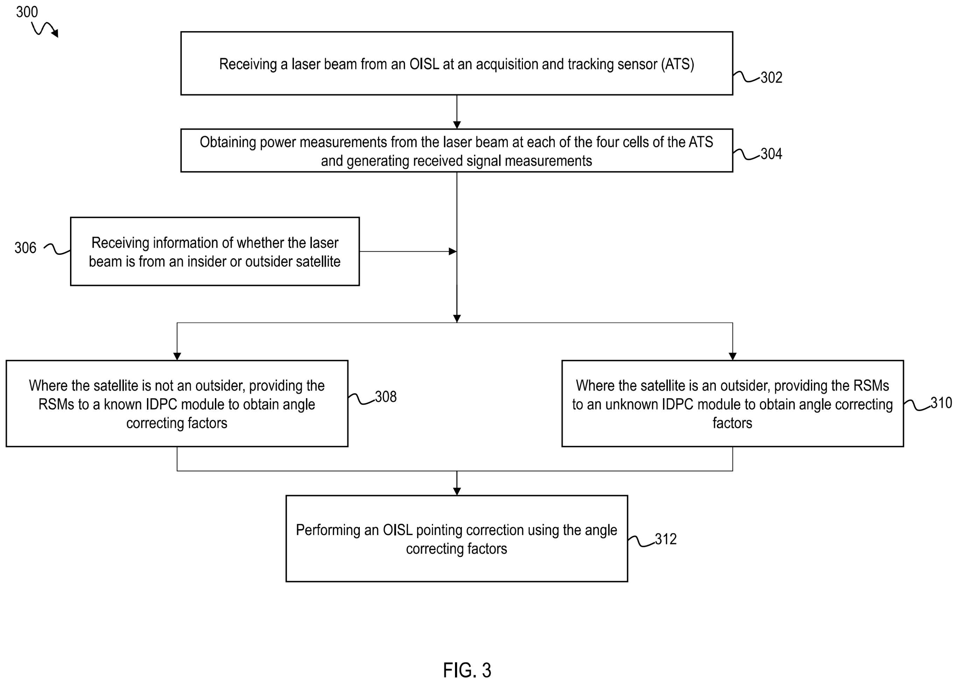

Referring now to Figure 3, shown therein is a method 300 of OISL impingement detection and pointing correction, according to an embodiment. The method 300 may be implemented by the system 100 of Figure 1.

At 302, the method 300 includes receiving a laser beam from an OISL of a transmitting satellite at an acquisition and tracking sensor (ATS) of a satellite, the ATS comprising a quadrant photodiode detector having a quadcell consisting of 4 sensors. The satellite may be the satellite 102-1 of Figures 1-2.

At 304, the method 300 includes obtaining power measurements from the laser beam at each of the four cells of the ATS and generating received signal measurements (RSMs).

At 306, the method 300 includes receiving information of whether the laser beam is from an insider satellite (and thus a known impingement) or an outsider satellite (and thus an unknown impingement).

At 308, where the satellite is determined at 306 to be an insider satellite, the method 300 further includes providing the RSMs to a known IDPC module to obtain angle correcting factors. The known IDPC module implements an impingement detection and pointing correction process for a known impingement type, as described herein. OISL units 106-1 and 106-2 are operating in a tracking mode, and Azimuth and Elevation angles of the insider satellite are available.

In an embodiment, the known impingement detection and pointing correction module operates as follows.

An impingement is identified for a given optical terminal within specific Azimuth and Elevation angles of the FOV range of the optical terminal. When the optical terminal is oriented such that the optical terminal enters the range where the impingement is present, angle correcting factors are included in the Azimuth and Elevation coefficients to bias the IDPC controller towards converging to the actual center of the non-deformed power capture pattern. The angle correcting factors are added to the corresponding power measurements in Equations 1 and 2 mentioned above (i.e., $(A, B, C, D) \rightarrow (A \pm \delta_A, B \pm \delta_B, C \pm \delta_C, D \pm \delta_D)$). The angle correcting factors will be varying depending on the Azimuth and Elevation angles of the optical terminal and the corresponding projection of impingement at the transmit (Tx) and/or receive (Rx), which can be arranged into a lookup table (LUT). The projection of impingement is a 2-D area of obstruction created by a 3D volume. Therefore, the IDPC controller is "aware" of the impingement existence when operating within specific Azimuth and Elevation ranges and performs a pointing correction using the LUT (to perform impingement detection and pointing correction, IDPC).

At 310, where the satellite is determined at 306 to be an outsider satellite, the method 300 further includes providing the RSMs to an unknown IDPC module to obtain the angle correcting factors or other pointing correction. The unknown IDPC module implements an impingement detection and pointing correction process for an unknown impingement type, as described herein.

In general, the unknown impingement detection and pointing correction module employs artificial intelligence (AI) to assess received laser beam signal levels at each optical terminal of the satellite. The received signal levels are assessed via constantly exchanged telemetries between the two optical terminals, and a transfer function is gradually derived and loaded into a LUT for adaptive adjustment. The unknown IDPC module includes a machine learning model trained for performing as an IDPC module. The machine learning module includes parameters configured to store information of how to detect an impingement and how to correct pointing of an OISL.

When an optical terminal connects to a terminal to which it has connected in the past, prior link information (such as, for example, link duration, explored Azimuth and Elevation angles, inter-satellite distances, and received signals) is used in a comparative manner to execute further learning of the AI and improve the quality of the connection between optical terminals (including, for example, bit rate and availability).

Depending on the rate of change of the received signal levels between optical terminals, prior links established between the optical terminals, and the quantity of available information between the optical terminals, system 100 may employ a plurality of AI models depending on the required convergence speed, likelihood of divergence, and reactiveness to signal level changes, among other factors.

Example AI models that may be used include algorithms such as least mean squares, recursive least squares, Bayesian, maximum likelihood, correlation, and covariance matching.

In an embodiment, the unknown impingement detection and pointing correction module operates as follows. This scenario may occur when communicating with an "outsider" terminal without the awareness that an impingement exists within the Azimuth/Elevation of that terminal. Without such knowledge of Azimuth and Elevation ranges in which the FOV is impacted, nor the size/projection of the impingement and its effect on the respective terminal alignment, an artificial intelligence (AI) process or machine learning (ML) algorithm may be invoked. AI may provide suitable solutions for such a problem when the exact model/knowledge is lacking but have measurements "data" to learn from. Different machine learning techniques may be used to address this problem including, without limitation, transfer learning for developing a pre-trained ML model, anomaly detection for impingement detection, Long Short-Term Memory (LSTM) for pointing correction, and Reinforcement Learning (RL) for developing a more adaptive and optimized model. The combination of one or more of these ML algorithms or techniques may be referred to as "AI-assisted IDPC". AI-assisted IDPC may improve the PAT accuracy, reduce the pointing error, and provide for an improved link quality and availability.

Transfer learning is an efficient way to train a ML model using data from one environment, to be used at another environment. Transfer learning can be used to train an ML model using existing data from a constellation, e.g. A, B, C, D measurements vs Impingement, to be deployed and updated when the impingement is from an outsider satellite. Doing so may improve the performance of the trained model and reduce the 'learning' phase when the model is transferred to a different environment.

For Anomaly Detection, a first target of the ML algorithm is to detect the existence of an impingement. One or more anomaly detection ML models can be used to train the model to raise a flag that an impingement exists when a specific set of power measurements is received by the ATS.

As an example, an anomaly detection model may employ a classification technique configured to take an input and classify the input into two or more categories. The classification technique may be trained by providing the model with a set of power measurements as input corresponding to a case where no impingement is present along the path of the laser beam, and labelling the corresponding output as no impingement present. The classification technique may be further trained by providing the model with a set of power measurements as input corresponding to a case where an impingement is present along the path of the laser beam, and labelling the corresponding output accordingly. The classification technique may be, as examples, a K-nearest neighbor algorithm or a support vector machine.

For pointing correction with LSTM, as discussed, the angle correcting factors ($\delta_A, \delta_B, \delta_C, \delta_D$) should be varying with Azimuth and Elevation angles, hence they are time-varying during the PAT process. A time-series ML model may be trained to provide different outcomes ($\delta_A$, $\delta_B$, $\delta_C$, $\delta_D$) at different series of events in which the power measurements (A, B, C, D) would be stored over a certain period of time, and processed accordingly to reflect the variations in the impingement projection (masking) over time, and optimize the angle correcting factors accordingly. LSTM is one example of an ML model that may be used to perform this function.

Other examples of time-series ML models include Recurrent Neural Network (RNN)-based models that enable learning of input data and the order or sequence of the input data. Such models may be configured to capture variations of the input data over time and provide an output specific to the variation of the input data over time. Such models may relate variations of power measurements over time while steering in Azimuth and Elevation angles, along with the existence of an impingement.

Reinforcement Learning (RL) is a more powerful alternative to time-series ML models. RL allows for a continuous learning and adaptation process, and a better case-specific performance optimization. RL may replace the whole controller job and develop a crafted IDPC algorithm for each scenario. Specifically, RL may be used provide an output specific to an input and a sequence of decisions taken. As an example, one RL model can be trained to optimize the pointing accuracy in scenarios where no impingement is present, where an impingement is present and is from an insider satellite, and where an impingement is present and is from an outsider satellite.

At 312, the method 300 further includes performing an OISL pointing correction using the angle correcting factors.

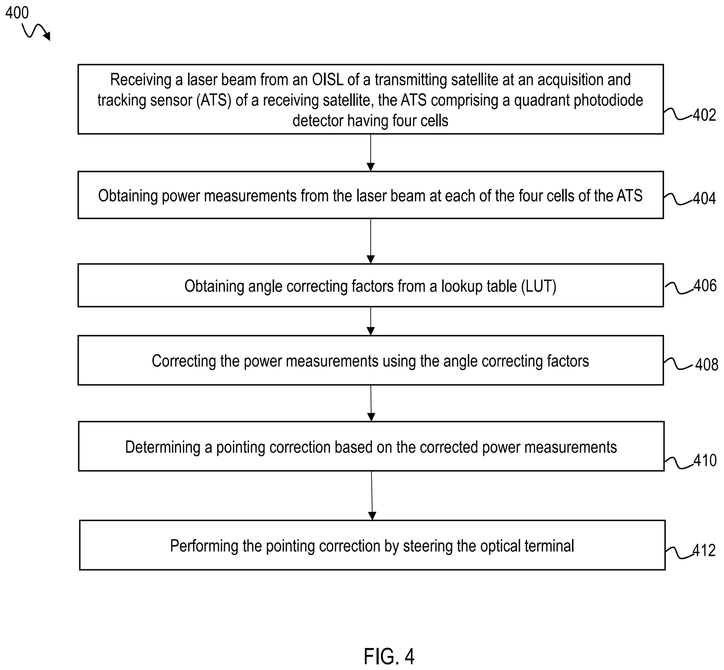

Referring now to Figure 4, shown therein is a method 400 of OISL impingement detection and pointing correction for a known impingement, according to an embodiment. The method 400 may be implemented by the system 100 of Figure 1.

At 402, the method 400 includes receiving a laser beam from an OISL of a transmitting satellite at an acquisition and tracking sensor (ATS) of a receiving satellite, the ATS comprising a quadrant photodiode detector having four cells.

At 404, the method 400 includes obtaining a power measurement from the laser beam at each of the four cells of the ATS.

At 406, the method 400 includes obtaining angle correcting factors from a lookup table (LUT).

At 408, the method 400 includes correcting the power measurements using the angle correcting factors.

At 410, the method 400 includes determining a pointing correction based on the corrected power measurements.

At 412, the method 400 includes performing the pointing correction by steering the optical terminal.

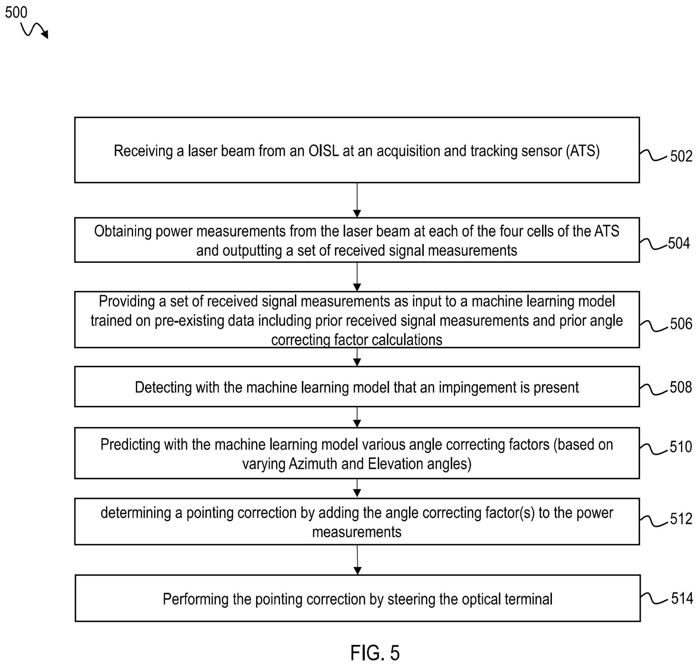

Referring now to Figure 5, shown therein is a method 500 of OISL impingement detection and pointing correction for an unknown impingement, according to an embodiment. The method 500 may be implemented by the system 100 of Figure 1.

At 502, the method 500 includes receiving a laser beam from an OISL of a transmitting satellite at an acquisition and tracking sensor (ATS) of a receiving satellite. The ATS comprises a quadrant photodiode detector having four cells.

At 504, the method 500 includes obtaining power measurements from the laser beam at each of the four cells of the ATS and outputting received signal measurements (RSMs).

At 506, the method 500 includes providing the RSMs as input to a machine learning model trained on pre-existing data including prior power measurements and prior angle correcting factor calculations.

At 508, the method 500 includes detecting with the machine learning model that an impingement is present.

At 510, the method 500 includes predicting with the machine learning model various angle correcting factors (based on varying Azimuth and Elevation angles).

At 512, the method 500 includes determining a pointing correction by adding the angle correcting factor to the power measurements.

At 514, the method 500 includes performing the pointing correction by steering the optical terminal.

While the above description provides examples of one or more apparatus, methods, or systems, it will be appreciated that other apparatus, methods, or systems may be within the scope of the claims as interpreted by one of skill in the art.

**Claims**

1. A system for use on a first satellite for impingement detection and pointing correction of an optical intersatellite link (OISL), comprising:

   an optical terminal for receiving a laser signal from a second satellite via the OISL and outputting signal measurement parameters based on the laser signal;
   an Impingement Detection and Pointing Correction System (IDPC) configured to:

determine a plurality of angle corrections using:

(i) a mapping of a predetermined impinged pointing angle of the optical terminal and a corresponding angle correction, the mapping stored as a data structure in a data storage device; or
(ii) a machine learning model stored in the data storage device and configured to receive the signal measurement parameters as input and output the angle correction; and

determine a pointing correction based on the signal measurement parameters and the angle correction; and

a steering module configured to steer the optical terminal based on the pointing correction.

2. The system of claim 1, wherein the optical terminal receives the laser signal via a Laser Signal Capture apparatus equipped with an acquisition and tracking sensor (ATS).

3. The system of claim 2, wherein the ATS is a quadrant photodiode detector.

4. The system of claim 3, wherein the angle correction includes an angle correcting factor for each quadrant in the quadrant photodiode detector.

5. The system of claim 1, wherein the predetermined impinged pointing angle is defined by Azimuth and Elevation angles of an optical head of the optical terminal relative to a satellite body of the first satellite and the second satellite.

6. The system of claim 1, wherein the pointing correction is added to Azimuth and Elevation signals to bias a controller of the optical terminal to an actual center of a non-deformed power capture pattern.

7. The system of claim 1, wherein the angle correction comprises angle correcting factors that are configured based on a range of angular Azimuth and Elevation angles where the impingement exists and a sensitivity of an area that is obstructed by the impingement.

8. The system of claim 1, wherein the predetermined impinged pointing angle is identified through a field of view (FOV) analysis performed during design of the first and the second satellite.

9. The system of claim 8, wherein the FOV analysis further includes identifying locations of any impinged pointing angles over a full Azimuth and Elevation range of the optical terminal, and wherein the impinged pointing angles are stored in the mapping with corresponding angle corrections.

10. The system of claim 1, wherein the predetermined impinged pointing angle includes Azimuth and Elevation angles at which the impingement exists, a shape of the impingement, and an impact of the impingement.

11. The system of claim 1, wherein the pointing correction includes one or more commands to the optical terminal to change the Azimuth and Elevation angles of the optical terminal in a way that reduces a pointing error.

12. The system of claim 1, wherein the onboard processor receives a communication from a network operating center indicating that the second satellite is an insider satellite, and wherein the onboard processor obtains the angle correction only upon identifying the second satellite as an insider satellite.

13. The system of claim 1, wherein the onboard processor uses configuration information from a previous connection between the first satellite and the second satellite indicating that the second satellite is an insider satellite stored in computer memory on the first satellite, and wherein the onboard processor obtains the angle correction only upon identifying the second satellite as an insider satellite.

14. A method of impingement detection and pointing correction of an optical intersatellite link (OISL), the method comprising:

receiving, at an optical terminal of a first satellite, a laser signal from a second satellite via the OISL when the optical terminal is pointed at a pointing angle;
obtaining, by a sensor of the optical terminal, signal measurement parameters based on the laser signal;
obtaining, via an acquisition and tracking sensor (ATS), Azimuth and Elevation angles of the optical terminal of a second satellite and outputting the signal measurement parameters by the optical terminal;

storing, in a data storage device on the first satellite, a mapping of the pointing angle to an angle correction, the pointing angle being a predetermined impinged pointing angle;

obtaining, by an Impingement Detection and Pointing Correction (IDPC) System of the first satellite, the angle correction from the data storage device when the optical terminal is at the pointing angle using the mapping;

determining, by the IDPC System, a pointing correction based on the signal measurement parameters and the angle correction; and

steering the optical terminal based on the pointing correction.

15. A system for use on a first satellite, the system comprising:

an optical terminal for receiving a laser signal from a second satellite via an optical intersatellite link (OISL) and outputting signal measurement parameters based on the laser signal;

a data storage device storing a mapping of a predetermined impinged pointing angle of the optical terminal to an angle correction;

an Impingement Detection and Pointing Correction (IDPC) System configured to:

obtain the angle correction from the data storage device when the optical terminal is at the predetermined impinged pointing angle using the mapping; and

determine a pointing correction based on the signal measurement parameters and the angle correction; and

a steering module configured to steer the optical terminal based on the pointing correction.

FIG. 1

Satellite 102-1

Optical Intersatellite Link Unit 106-1

Impingement Detection and Pointing Correction System 110-1

Optical Terminal 120-1

On-Board Processor 108-1

OISL Controller 112-1

Steering Module 118-1

OISL 104

Optical Terminal 120-2

Impingement Detection and Pointing Correction System 110-2

Steering Module 118-2

OISL Controller 112-2

On-Board Processor 108-2

Optical Intersatellite Link Unit 106-2

Satellite 102-2

EP 4 783 487 A1

FIG. 2

EP 4 783 487 A1

EP 4 783 487 A1

300

Receiving a laser beam from an OISL at an acquisition and tracking sensor (ATS) — 302

Obtaining power measurements from the laser beam at each of the four cells of the ATS and generating received signal measurements — 304

306 — Receiving information of whether the laser beam is from an insider or outsider satellite

Where the satellite is not an outsider, providing the RSMs to a known IDPC module to obtain angle correcting factors — 308

Where the satellite is an outsider, providing the RSMs to an unknown IDPC module to obtain angle correcting factors — 310

Performing an OISL pointing correction using the angle correcting factors — 312

FIG. 3

400

```
┌─────────────────────────────────────────────────────────────────┐
│ Receiving a laser beam from an OISL of a transmitting satellite   │
│ at an acquisition and tracking sensor (ATS) of a receiving        │  402
│ satellite, the ATS comprising a quadrant photodiode               │
│ detector having four cells                                        │
└─────────────────────────────────────────────────────────────────┘
                                │
                                ▼
┌─────────────────────────────────────────────────────────────────┐
│ Obtaining power measurements from the laser beam at each of the   │  404
│ four cells of the ATS                                             │
└─────────────────────────────────────────────────────────────────┘
                                │
                                ▼
┌─────────────────────────────────────────────────────────────────┐
│ Obtaining angle correcting factors from a lookup table (LUT)      │  406
└─────────────────────────────────────────────────────────────────┘
                                │
                                ▼
┌─────────────────────────────────────────────────────────────────┐
│ Correcting the power measurements using the angle correcting      │  408
│ factors                                                           │
└─────────────────────────────────────────────────────────────────┘
                                │
                                ▼
┌─────────────────────────────────────────────────────────────────┐
│ Determining a pointing correction based on the corrected power    │  410
│ measurements                                                      │
└─────────────────────────────────────────────────────────────────┘
                                │
                                ▼
┌─────────────────────────────────────────────────────────────────┐
│ Performing the pointing correction by steering the optical        │  412
│ terminal                                                          │
└─────────────────────────────────────────────────────────────────┘
```

FIG. 4

500

Receiving a laser beam from an OISL at an acquisition and tracking sensor (ATS) — 502

Obtaining power measurements from the laser beam at each of the four cells of the ATS and outputting a set of received signal measurements — 504

Providing a set of received signal measurements as input to a machine learning model trained on pre-existing data including prior received signal measurements and prior angle correcting factor calculations — 506

Detecting with the machine learning model that an impingement is present — 508

Predicting with the machine learning model various angle correcting factors (based on varying Azimuth and Elevation angles) — 510

determining a pointing correction by adding the angle correcting factor(s) to the power measurements — 512

Performing the pointing correction by steering the optical terminal — 514

FIG. 5

FIG. 6

EP 4 783 487 A1

## EUROPEAN SEARCH REPORT

**Application Number**

EP 26 15 3614

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 424 827 B1 (ADAMS JEFF CLARK [US] ET AL) 23 August 2022 (2022-08-23) | 1-6, 11-15 | INV. H04B10/118 |
| A | * column 2, line 35 - line 44 * <br> * column 3, line 42 - line 59; figure 3 * <br> * figures 6,7 * <br> * column 14, line 50 - line 56 * <br> * column 21, line 1 - line 19 * <br> * column 15, line 1 - line 29 * <br> * column 8, line 61 - column 9, line 38 * <br> ----- | 7-10 | |
| A | CN 115 451 944 B (CHINA ACADEMY SPACE TECHNOLOGY) 24 December 2024 (2024-12-24) <br> * paragraph [0005] * <br> ----- | 1-15 | |
| A | CN 118 569 056 A (BEIJING INSTITUTE TECH; CHINA ACADEMY SPACE TECHNOLOGY) 30 August 2024 (2024-08-30) <br> * paragraph [0062] - paragraph [0065] * <br> ----- | 1-15 | |
| A | JP 2000 165327 A (NEC CORP) 16 June 2000 (2000-06-16) <br> * paragraph [0014] * <br> ----- | 1-15 | TECHNICAL FIELDS SEARCHED (IPC) <br><br> H04B |

The present search report has been drawn up for all claims

| Place of search | Date of completion of the search | Examiner |
|---|---|---|
| Munich | 11 June 2026 | Borsier, Celine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

**EP 4 783 487 A1**

## ANNEX TO THE EUROPEAN SEARCH REPORT
## ON EUROPEAN PATENT APPLICATION NO.

EP 26 15 3614

This annex lists the patent family members relating to the patent documents cited in  the above-mentioned European search report.
The members are as contained in the European Patent Office EDP file on
The European Patent Office is in no way liable for these particulars which are merely given for the purpose of information.

11-06-2026

| Patent document cited in search report | | Publication date | Patent family member(s) | | Publication date |
|---|---|---|---|---|---|
| US 11424827 | B1 | 23-08-2022 | US 11424827 B1 <br> WO 2022198170 A1 | | 23-08-2022 <br> 22-09-2022 |
| CN 115451944 | B | 24-12-2024 | NONE | | |
| CN 118569056 | A | 30-08-2024 | NONE | | |
| JP 2000165327 | A | 16-06-2000 | NONE | | |

EPO FORM P0459

For more details about this annex : see Official Journal of the European Patent Office, No. 12/82